# EUROPEAN PATENT SPECIFICATION

(11) **EP 2 638 703 B1**
(45) Date of publication and mention of the grant of the patent: **06.09.2017**
(21) Application number: 11771360.2
(22) Date of filing: 06.10.2011
(51) Int. Cl.: H04Q 1/14

(54) **MODULAR TERMINATION MODULE WITH CONTACTS FOR CONNECTING TELECOMMUNICATION WIRES THEREWITH**
MODULARES ANSCHLUSSMODUL MIT KONTAKTEN FÜR DEN ANSCHLUSS VON TELEKOMMUNIKATIONSKABELN
MODULE DE RACCORDEMENT MODULAIRE MUNI DE CONTACTS POUR LA CONNEXION DE FILS DE TÉLÉCOMMUNICATION À CES DERNIERS

(30) Priority: 08.11.2010 US 410990 P
(43) Date of publication of application: 18.09.2013
(73) Proprietor: 3M Innovative Properties Company, St. Paul, MN 55133-3427 (US)
(72) Inventor: METRAL, Guy, F-95006 Cergy Pontoise Cedex (FR); FASCE, Xavier, F-95006 CergyPontoise Cedex (FR)
(74) Representative: Müller, Bruno
(86) International application number: PCT/US2011/055039
(87) International publication number: WO 2012/064431

(56) References cited:
- EP-A1- 1 578 145
- EP-A1- 1 750 461
- EP-A1- 1 993 296
- DE-A1- 3 623 551

## Description

### BACKGROUND OF THE INVENTION

### Field of the Invention

The invention relates to a modular termination module with contacts for connecting telecommunication wires therewith.

### Background

In the field of telecommunications, numerous customers or subscribers are connected with the switch of a telecommunications company via telecommunications lines or wires. The switch is also called an exchange. Between the subscriber and the switch, sections of telecommunications lines are connected with telecommunications modules. The telecommunications modules establish an electrical connection between a wire which is attached to the telecommunications module at a first side, and another wire which is attached to the telecommunications module at a second side. Plural telecommunications modules can be put together at a distribution point, such as a main distribution frame, an intermediate distribution frame, an outside cabinet or a distribution point located, for example, in an office building or on a particular floor of an office building. To allow flexible wiring, some telecommunications lines are connected with first telecommunications modules in a manner to constitute a permanent connection. Flexibility is realized by so-called jumpers, which flexibly connect contacts of the first telecommunications module with contacts of a second telecommunications module. These jumpers can be changed when a person moves e.g. within an office building to provide a different telephone (i.e. a different telephone line) with a certain telephone number, which the relocated person intends to keep.

Recently, ADSL-technology has spread widely in the field of telecommunications. This technology allows at least two different signals to be transmitted on a single line. This is achieved by transmitting the different signals at different frequencies along the same line. The signals are combined at a particular point in the telecommunications line and split at another point. In particular, at the subscriber side, voice and data signals, which are separate, are combined and sent to a central office of the telecommunications company via the same line. In the central office the combined signal is split. For the transmission of voice and data signals to the subscriber, separate voice and data signals are combined at the central office, sent to the subscriber and split at the subscriber side. After splitting the signal, the so-called POTS (plain old telephone service) signal can be used to transmit voice signals. The remaining part of the split signal can be used to transmit data. So-called splitters, which are used to split or combine the signal, can generally be arranged at any distribution point.

EP 1 578 145 A1 discloses an assembly for telecommunication modules with contacts for connecting wires therewith. The assembly comprises a carrier and telecommunication modules as well as an adapter, wherein the adapter connects the modules with the carrier. Each adapter is adapted to carry at least three telecommunication modules. The adapter further allows swiveling of the telecommunication modules relative to the carrier.

EP 1 578 144 B1 refers to an assembly of telecommunication or contact modules with a carrier and a first contact module which is adapted to be mounted onto the carrier. This document further refers to a functional module, which may comprise one or more splitter circuits and/or one or more test and/or monitoring circuits for testing and monitoring telecommunication lines. A second contact module is fittable to the functional module and can be considered to constitute an incoming or an outgoing side of the modular arrangement.

EP 2 207 362 A1 discloses an assembly of telecommunication or termination modules having contacts for connecting wires therewith with a carrier for carrying the termination modules, wherein the termination modules are pivotally attached to the carrier. The termination modules are attached to the carrier over a pivot adapter that is detachably attached to the carrier and may be fixed to other pivot adapters.

EP 1 750 461 B1 discloses an assembly for telecommunication modules with a carrier and telecommunication modules mounted on the carrier. The assembly comprises at least two grounding elements, one is fitted to the module and the other is fitted to the carrier. The two grounding elements are in direct contact with each other and can be pivoted with regard to each other while keeping contact.

Telecommunication assemblies are needed to achieve a high density of connections with telecommunication lines which carry line, POTS and DSLAM signals. These lines or wires are connected with the contacts of the telecommunication assembly. Furthermore telecommunication assemblies are needed to provide a high amount of flexibility for different applications.

### SUMMARY

The present invention provides a modular termination module for a telecommunication assembly, that comprises contacts for connecting telecommunication wires (i.e. signal carriers or lines) therewith and a support adapted to be connected to the telecommunication assembly. The central support further comprises at least one interface for engaging with different kind of contact strips carrying the contacts for connecting wires therewith, wherein the contact strips differ in the kind of contacts they carry.

In other words the invention provides a termination module for a telecommunication assembly with a support that is adapted to carry a variety of contact strips thereby providing the possibility of adapting the features or properties of the termination module according to each application. The modular termination module according to the invention may therefore be used for example in splitter applications, in main distribution frame (MDF) applications or in high density (HD) applications. Depending on the application the termination module is going to be used in, the appropriate contact strip may be attached to the support. The interface of the support provides the basis for connecting different kind of contact strips to the support and thereby building up termination modules that are adaptable to different applications.

A termination module with contacts for connecting wires therewith establishes an electrical connection between telecommunication wires, e.g. between wires which lead to a subscriber and wires that lead to a switch or exchange of a telecommunication company. The wires are connected to different contacts. The contacts inside the termination module provide the electrical connection between the wires. The contacts are made out of electrically conductive material. The other parts of the termination module may be made out of electrically non conductive or isolating material such as for example plastic.

The termination module according to the invention is modular. In other words the termination module according to the invention comprises several parts that may be attached to each other. Depending on the application the termination module may be built up with different modules, e.g. different contact strips, and thereby it may provide different features. The modular system according to the invention is realized by providing one support, e.g. one central support that comprises at least one interface for engaging with contact strips carrying contacts. The contact strips may differ in the kind of contacts they carry. That means that the contacts the contact strips carry may differ in their shape, number, extension, connection to other contacts within and/or outside the module etc. The contact strips also provide an interface that is adapted to engage with the interface of the support. With a termination module according to the invention it is for example possible to build up a solution of a splitter application by attaching contact strips to the support that provide contacts that are adapted to transmit POTS, line and DSLAM signals. Another example may be main distribution frame or MDF application or a high density HD application. Such applications will be described in more detail with reference to the Figures.

The contact strips may comprise a housing. The housing may be made out of plastic or any other suitable material allowing electrical insulation. The housing can be constituted by one ore more components. The housing serves to accommodate contacts, to which telecommunication lines/wires or electronic components are connectable. The housing can also have specific structures for positioning the contacts therein. Moreover, the housing can comprise one or more cavities or receiving spaces, which are adapted to accommodate contacts and/or objects such as one or more electronic components or functional modules or parts thereof.

The interface of the support according to the invention may be any kind of interface, for example a mechanical interface, that provides the possibility of attaching a module, such as for example a contact strip, to the support. The interface is adapted to accommodate any kind of structure that is necessary to provide the functionality of the termination module.

A telecommunication assembly in the sense of the invention comprises a carrier that is adapted to carry or to support the modular termination strips according to the invention.

According to one embodiment of the invention the support of the modular termination module may comprise a hinge element adapted to engage with a complementary hinge element of the telecommunication assembly allowing swiveling of the modular termination module with regard to the telecommunication assembly. That arrangement allows swiveling of the termination module relative to the telecommunication assembly from a closed position into an open position. The termination module may comprise contacts on its front side and on its rear side. The front side is the side of the termination module that - in a closed position of the termination module - faces away from the telecommunication assembly. The rear side of the termination module is the side that - in a closed position of the termination module - faces the carrier. In the closed position of the termination module the contacts on the front side are accessible and in the open position the contacts on the rear side are accessible. Such an assembly simplifies the installation of the inventive telecommunication assembly. The hinge element can have any kind of known geometry that allows swiveling of the termination module relative to the telecommunication assembly. The telecommunication assembly may for example comprise a bar with a round cross section and the termination module may comprise a c-shaped structure that may be clipped to the bar after the bar has been attached to the telecommunication assembly. The termination module may also comprise a closed round structure. In such a case the bar would need to be pushed into the hinge element from the side before the bar is attached to the telecommunication assembly.

According to another embodiment the interface of the support for engaging with contact strips has a meandering shape.

The support of the modular termination module according to the invention may comprise two interfaces for engaging with different kind of contact strips. The interfaces of the support may face two opposite directions. The modular termination module may therefore provide a support, wherein the interfaces of the support engage with two contact strips that are arranged on opposite sides of the support. Such a configuration may have contacts on the front side and on the rear side of the modular termination module with the advantage of a high density of contacts within the termination module, which provides a compact wire termination solution.

The modular termination module may have a support that comprises a structure for carrying electrically conductive bridging elements for electrically connecting contacts of the contact strips with each other. Depending on the application the modular termination module according to the invention is going to be used in, it might be necessary to connect contacts of the contact strips, e.g. contacts of contact strips that are positioned on opposite sides of the support, with each other. The modular termination module may have a support that comprises a structure for carrying at least one printed circuit board (PCB) for electrically connecting contacts of the contact strips. Using a printed circuit board for electrically connecting the contacts on different sides of the support offers the advantage of being able of integrating all electrical connections between the contacts on one board. In addition it is possible to customize and/or improve electrical features of the connector by modifying the printed circuit board. If one or more printed circuit boards are used for electrically connecting contacts of the contact strips with each other, the printed circuit boards may comprise at least one additional functional element such as for example a cross talk compensation element, thereby being able to reach a higher level of performance of the termination module. The printed circuit board could also be used to open a circuit by switch or by relay, by manual action or by remote. The printed circuit board may also provide an electrical line protection. It is also possible to integrate a visualization of the line status, for example with a LED, on the printed circuit board. The printed circuit board may have a voltage supply.

The support comprises an appropriate structure for accommodating electrically conductive bridging elements that establish such a connection between contacts. The support may for example provide openings for accommodating the bridging elements. The support may further provide elements that allow fixing of the bridging elements within the support. The bridging elements may have fixing elements as well such as for example hooks that allow fixing the bridging elements relative to the support.

The modular termination module according to the invention may further provide a support that comprises wire guide elements. The wire guide elements may for example be ring shaped. The may have an opening or a slot for introducing the wires that are guided by the elements. If the wire guide elements and the support are made out of one piece, no additional elements need to be produced or to be mounted during assembly of the modular termination module. That provides a cost advantage of the modular termination module according to the invention.

The support of the modular termination module according to the invention may comprise fixing structures for fixing wire guide housings with wire guide channels. A termination module with additional wire guide housings with wire guide channels for one or a selected number of wires may be an alternative solution or an additional solution to the one just described, having single wire guide elements for a higher number of wires.

The modular termination module according to the invention may further comprise a support with corresponding fastening elements for fixing modular termination modules adjacent each other. The support may for example provide a hook at one side and a corresponding opening for receiving the hook at the opposite side. Such an arrangement allows engaging the hook of a first support with the corresponding opening of a second support and thereby fixing the first support and the second support at each other.

The modular termination module according to the invention may comprise a grounding element that is fitted to the support adjacent at least one of the contact strips. Depending on the application of the modular termination module, a grounding element extends adjacent a contact strip may be necessary, for example in a MDF application where protection plugs may be used. The support may comprise appropriate fixing structures, such as for example holes, to receive parts of and hold the grounding element.

The invention further comprises telecommunication assembly comprising a carrier and at least one modular termination module with a support and at least one contact strip as described above, wherein the support connects the modular termination module with the carrier.

According to one embodiment of the inventive telecommunication assembly, the carrier is u-shaped and comprises a base and two side portions extending perpendicular to the base on two opposite sides of the base.

The telecommunication assembly according to the invention may comprise a swivel axis extending perpendicular to the two side portions of the u-shaped carrier for attaching the at least one modular termination module.

The carrier of the telecommunication assembly may be provided in the form of a trough. It may have a u-shaped or a L-shaped cross section. The carrier has a length, which allows a plurality of termination modules to be mounted thereon. Moreover, the termination modules may be displaceably mounted, for example, slidably along the length of the carrier.

The carrier may comprise suitable structures for mounting termination modules on it, such as for example a swivel axis. The carrier may be made at least partially out of an electrically conductive material such as for example metal, to form part of a connection to ground. Such a connection can be required for a number of reasons. Firstly, termination modules may be provided with overvoltage protectors, such as surge arresters, which serve to divert overvoltage, for example, which might occur in the event of lightning, to ground. Secondly, telecommunication modules and/or wires connected therewith can comprise shielding in order to avoid crosstalk between adjacent lines. Any current, which is induced in any shielding components, needs to be diverted to ground. Moreover, electrostatic charging can occur which can be diverted to ground. Thus, for the above mentioned purposes an electrical connection between the telecommunication module and ground is beneficial. It is also possible to make the carrier out of another suitable material, such as for example plastic, and to provide separate grounding elements.

### BRIEF DESCRIPTION OF THE DRAWINGS

The invention will now be described in more detail with reference to the following Figures exemplifying particular embodiments of the invention:
Figs. 1a and b are perspective views of a telecommunication assembly according to one exemplary embodiment of the invention with a carrier and modular termination modules;
Figs. 1c and d are perspective views of a telecommunication assembly according to two other exemplary embodiments of the invention with a carrier and modular termination modules;
Fig. 2 is an exploded view of the telecommunication assembly of Fig. 1;
Fig. 3 is a partially exploded view of the telecommunication assembly of Figs. 1 and 2 with some of the termination modules being removed;
Figs. 4a to 4b are perspective views of a termination module according to one exemplary embodiment of the invention;
Figs. 5a to 5c are perspective views of a central support of the termination module of Figs. 4a and 4b;
Fig. 5d is a perspective view of part of another exemplary embodiment of a central support of the termination module according to the invention;
Fig. 6 is a perspective view of contact strips of the termination module of Figs. 4a and 4c;
Fig. 7 is a perspective view of a grounding element of the termination module of Figs. 4a and 4c;
Fig. 8 is a perspective view of a hinge of the central support of the termination module of Figs. 4a to 4b with part of the grounding element of Fig. 7;
Figs. 9a to 9b are cross sectional views of a splitter application of the modular termination module according to one exemplary embodiment of the invention;
Figs. 10a to 10b are cross sectional views of a MDF application of the modular termination module according to one exemplary embodiment of the invention;
Fig. 11 is an exploded view of a part of the central support of Figs. 5a to 5c and two exemplary bridging elements;
Fig. 12 is a cross sectional view of a HD application of the modular termination module according to one exemplary embodiment of the invention;
Fig. 13 is an exploded view of a part of the central support of Figs. 5a to 5c and four exemplary bridging elements;
Fig. 14 is three dimensional view of another exemplary embodiment of the invention showing a cross section of a modular termination module;
Fig. 15 is a perspective view of the central support with a front strip and a printed circuit board of fig. 14 and
Fig. 16 is a schematical view of a part of the printed circuit board of Figs 14 and 15 showing the traces on the board.

### DETAILED DESCRIPTION OF THE EMBODIMENTS

Herein below various embodiments of the present invention are described and shown in the drawings wherein like elements are provided with the same reference numbers. Directional terms such as "top," "bottom," "right," "left," and others are used with reference to the orientation of the Figure(s) being described.

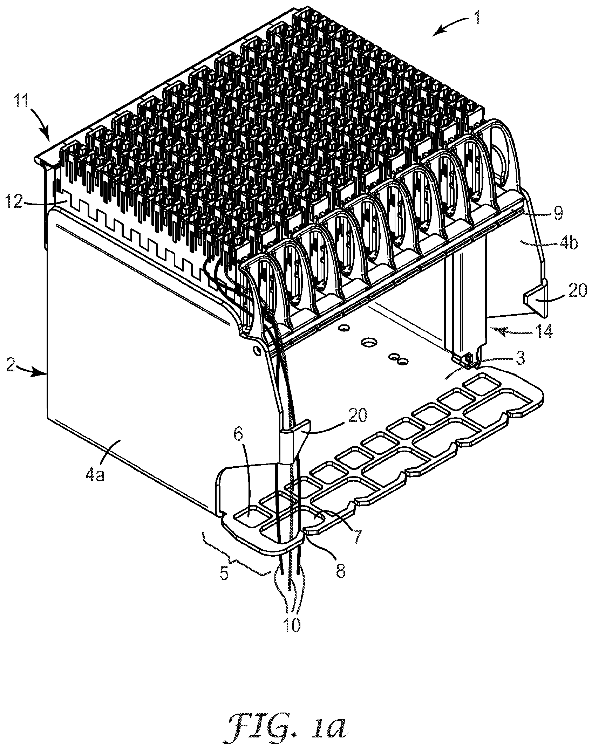

Fig. 1a is a perspective view of an of a telecommunication assembly 1 according to one exemplary embodiment of the invention. The telecommunication assembly 1 comprises a carrier 2. The carrier 2 is u-shaped and comprises a basically rectangular base 3 and two side portions 4a and 4b. The side portions 4a and 4b extend perpendicular to the base 3 and are positioned on two opposite first sides of it. The base 3 further comprises a cable management portion 5 for fixing and organizing cables and/or wires. This cable management portion 5 extends on a second side of the base 3 that extends between its first sides, between the two side portions 4a and 4b and comprises two rows of cuts or openings. The first row comprises closed cuts 6 and the second row comprises open cuts 7 with a slot 8 for pushing cables and/or wires 10 through. It is also possible to have two rows with closed cuts. The telecommunication assembly further comprises two stops 20 to stop the swiveling of the modular termination modules 11 in an open position, that extend perpendicular from the side portions 4a and 4b.

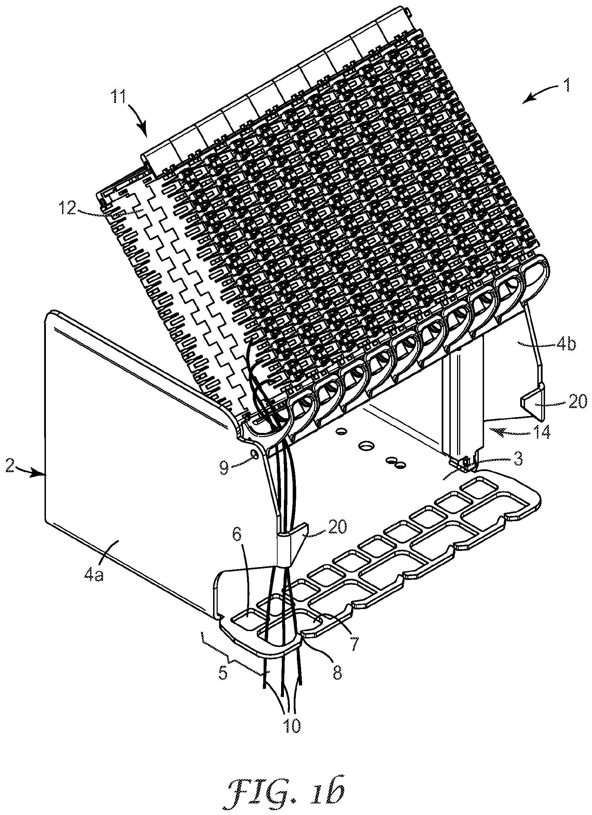

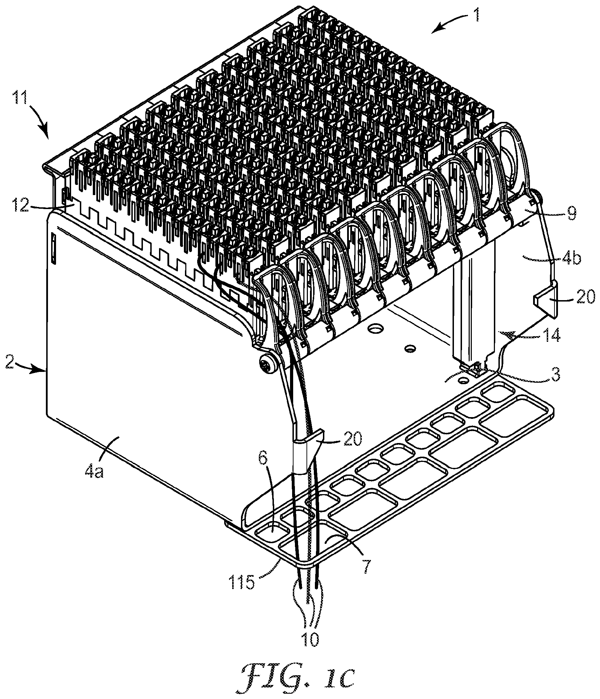

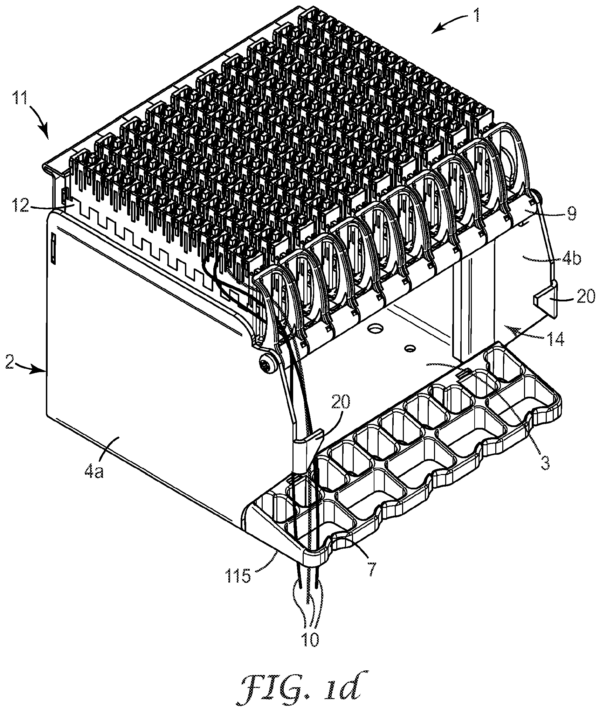

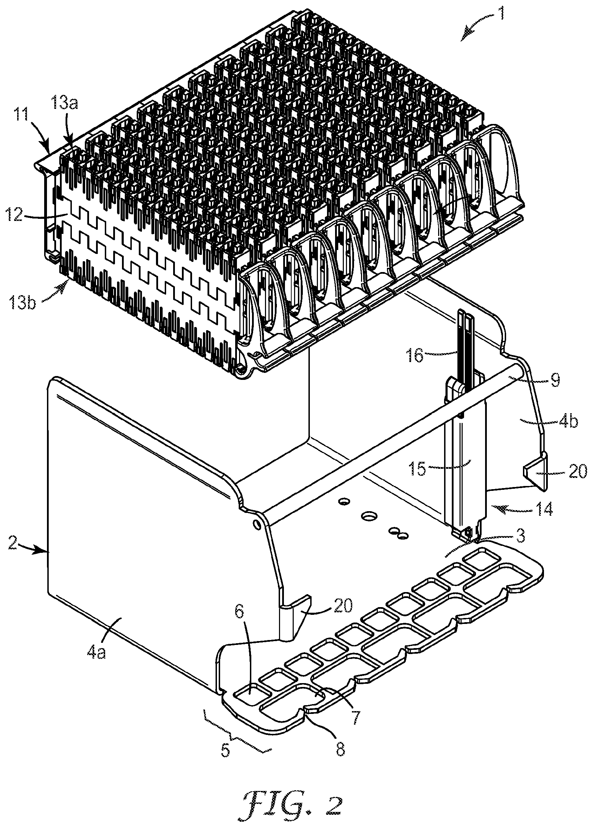

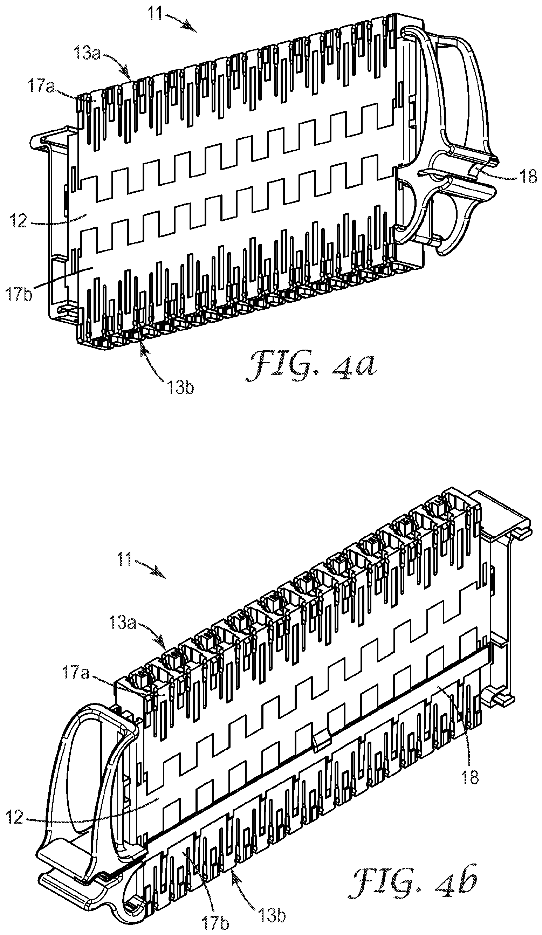

The carrier 2 further comprises a swivel axis 9 that extends between the two side portions 4a and 4b at a certain distance from the base 3. The swivel axis 9 is arranged at the same side of the carrier 2 as the cable management portion 5. A plurality of modular termination modules 11 are attached to the swivel axis by a central support 12. The modular termination modules 11 comprise contacts (not shown in Fig. 1) for connecting wires therewith at the front side 13a and the rear side 13b (see Fig. 2) and will be described in detail with reference to Figs. 4a to 4c. The termination modules 11 may be fixed in the horizontal or closed position by any kind of conventional fasteners such as for example an opening in the carrier 2 and corresponding protrusions in the central support 12 of the termination modules 11. It is also possible to provide a telecommunication assembly 1 without stops but with a second bar that is attached to the telecommunication assembly underneath and parallel to the swivel axis 9. The second bar may serve the same stop function.

The modular termination modules 11 are adapted to receive plugs from the front side 13a and from the rear side 13b, such as for example splitter plugs 14 attached at the rear side 13b as can be seen in Figs. 1a to 1d, 2 and 3. The splitter plug 14 is inserted from the rear side 13b and allows easy rewiring from the front side 13a without disturbing the splitter plug 14.

Fig. 1b is a perspective view of the telecommunication assembly 1 shown in Fig. 1a with modular termination modules 11 partly swiveled around the swivel axis 9.

Figs. 1c and 1d are perspective views of telecommunication assemblies 1 according to two other exemplary embodiments of the invention with a carrier 2 and modular termination modules 11. These embodiments differ from the one shown in Fig. 1a and 1b in that the cable management portion 5 of the carrier 2 is made as a separate cable management part 115. The cable management part 115 may be attached to the carrier 2 by conventional fasteners. The cable management port 115 may for example be made out of sheet metal as shown in Fig. 1c or it may be made out of plastic and produced by injection moulding as shown in Fig. 1d.

Fig. 2 is an exploded view of the telecommunication assembly of Fig. 1a with the modular termination modules 11 removed from the carrier 2. The Figure shows the u-shaped carrier 2 with its base 3 and its two side portions 4a and 4b as well as the swivel axis 9 extending between the two side portions. A splitter plug 14 is arranged within the carrier 2. The splitter plug 14 comprises a housing 15 and two contact fingers 16 that may be inserted into the modular termination module 11 at the rear side 13b of the module as shown in Fig. 1a.

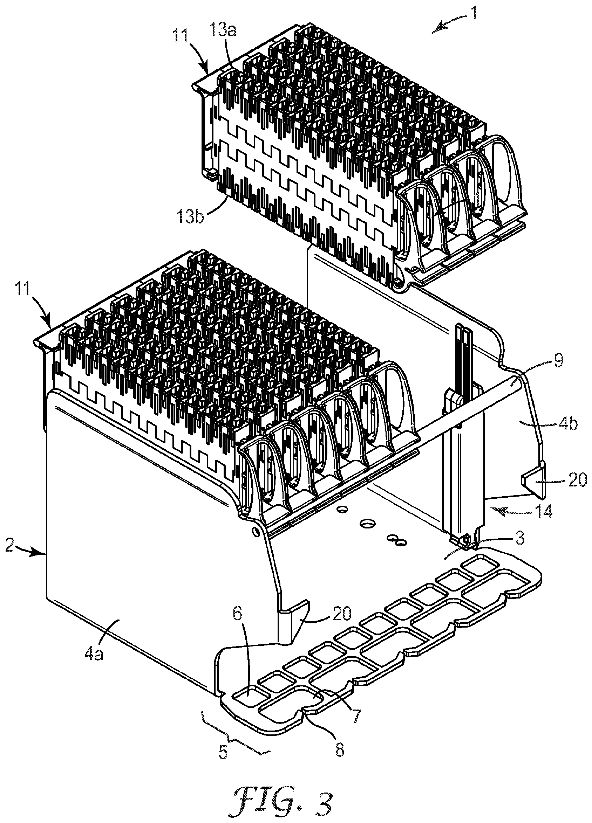

Fig. 3 is a partially exploded view of the telecommunication assembly of Figs. 1a, 1b and 2 with some of the termination modules 11 being removed from the carrier 2.

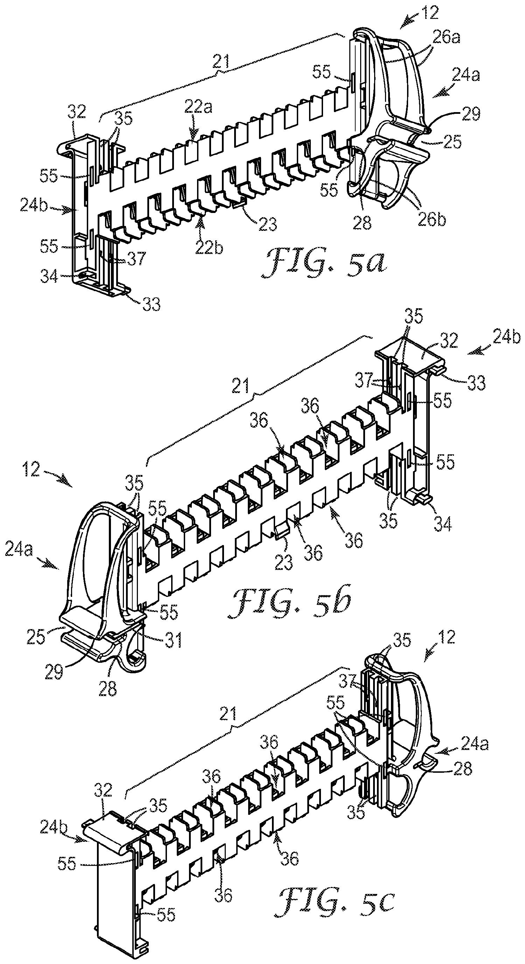

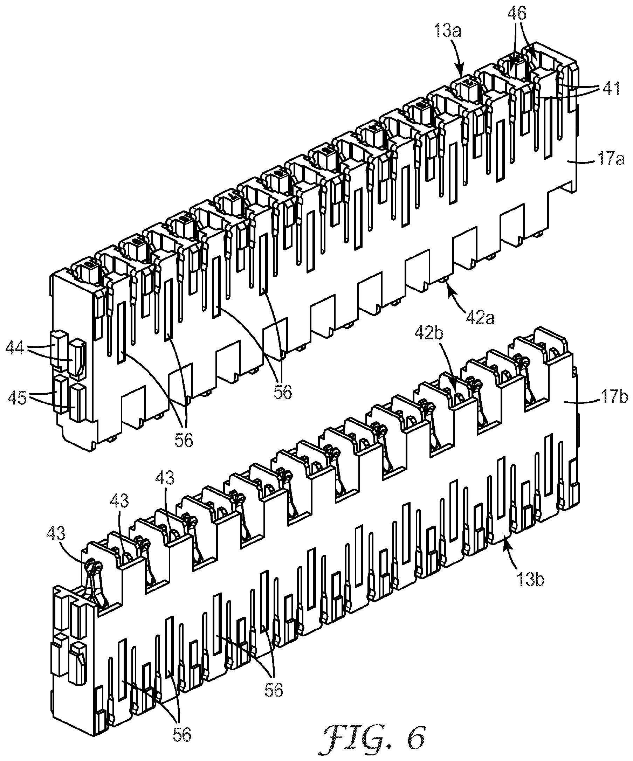

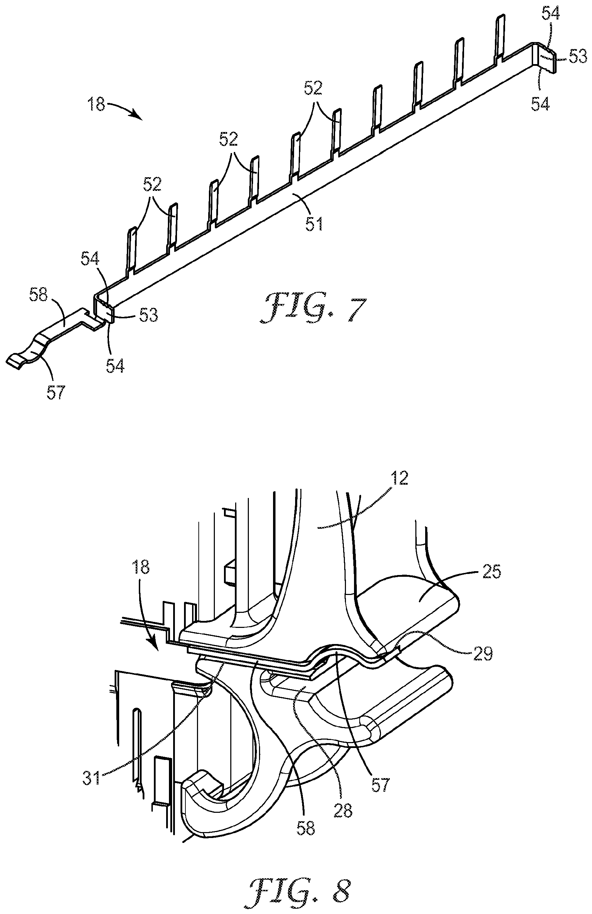

Figs. 4a and 4b are perspective views of the modular termination module 11 according to one embodiment of the invention. The modular termination module 11 comprises a central support 12 (shown in detail in Fig. 5a to 5c), two contact strips - a front contact strip 17a and a rear contact strip 17b (shown in detail in Fig. 6) and a grounding element 18 (shown in detail in Fig. 7). The central support 12 and the housing of the contact strips 17a and 17b are made out of electrically non conductive or insulating material and the contacts contained within the contact strips and the grounding element 18 are made out of electrically conductive material. The grounding element 18 is attached to one side of the termination module 11.

Figs. 5a to 5c are perspective views of the central support 12 of the modular termination module 11 of Figs. 4a and 4b. The central support 12 comprises a middle portion 21 and two lateral portions 24a and 24b. The middle portion 21 comprises a front interface 22a and a rear interface 22b for engaging with complementary interfaces of the contact strips 17a and 17b. The interfaces 22a and 22b have meandering shapes that are arranged in a staggered way relative to each other. The interfaces 22a and 22b may further be connected through openings 36 (see Figs. 5b and 5c) with each other. The openings 36 provide the possibility of accommodating for example means for electrically connecting contacts of the front strip 17a with contacts of the rear strip 17b. The central support 12 comprises in the center of the middle portion 21 next to the rear interface 22b a hook 23 for holding the grounding element 18 to the modular termination module relative to contact strip 17b. Alternatively hook 23 may also be located next to the interface 22a depending on the application of the modular termination module 11.

The first lateral portion 24a, which will be named the swivel portion 24a in the following, comprises a c-shaped hinge element 25 for receiving the swivel axis 9 of the telecommunication assembly 1 and providing the possibility to swivel or rotate a modular termination module 11 relative to the telecommunication assembly 1. This rotation provides access to contacts of the module 11 that are located at the rear side of the module and allows one for example to add a plug or plugs, such as splitter plugs 14, to the rear side of the termination module. The opening in the c-shaped hinge element 25 provides the possibility to attach termination modules 12 to the telecommunication assembly 1 after the swivel bar 9 has been attached to the telecommunication assembly 1. The swivel portion 24a of the central support 12 also provides two parallel essentially ring-shaped wire guiding elements 26a that are located towards the front side 13a of the modular termination module 11 as well as two parallel essentially ring-shaped wire guiding elements 26b that are located towards the rear side 13b of the modular termination module 11. The c-shaped hinge element 25 is arranged between the wire guiding elements 26a and 26b. The wire guiding elements 26a that are located towards the front side 13a are longer than the wire guiding elements 26b that are located towards the rear side 13b. The c-shaped hinge element 25 is therefore located off-centre of the swivel portion 24a. A slot 28 extends from the c-shaped hinge element 25 towards the middle portion 21 of the central support 12 and provides flexibility to the hinge element 25 so that it can be snap-fitted onto the swivel axis 9 of the telecommunication assembly 1. The c-shaped hinge element 25 further provides an open groove 29 within its surface that is directed to the swiveling axis 9 for receiving a contact part 57 of the grounding element 18 for making electrical contact to the swivel axis 9. A channel 31 extends from the groove 29 through the swivel portion 24a towards the middle portion 21. The channel 31 is adapted to receive a connection part 58 of the grounding element 18.

The second lateral portion 24b of the support, which will be named labeling portion 24b in the following, provides a labeling zone 32 that has a flat surface and allows labeling of the modular termination modules 11 through for example adhesive labels or direct printing, such as for example laser printing and ink jet, or even stamping and hot marking. The labeling portion 24b further provides two small hooks 33 that extend into a direction perpendicular to the central support 12. These small hooks 33 may cooperate with corresponding recesses 34 of a second central support 12 and allow fixing of two central supports 12 adjacent each other and thereby providing the possibility of fixing several modular termination modules 11 to each other so that the modules may be pivoted open and closed together as a unit. Hook 23 and recesses 34 are located on opposite sides of the central support 12.

The swivel portion 24a and the labeling portion 24b both provide parallel guiding notches 35 facing the middle portion 21 for receiving complementary structures of contact strips 17a and 17b. During assembly of the termination module 11 the guiding notches 35 guide the contact strips towards the support 12 such that the interfaces 22a and 22b of the support 12 engage with corresponding structures 42a, 42b of the contact strips 17a, 17b. Catches 37 fix the contact strips 17a and 17b to the central support. The guiding notches 35 each have an undercut such that the notches have an essentially L-shaped cross-section as best can be seen in Fig. 5b. Furthermore each guiding notch 35 provides a catch 37 for securing the contact strips 17a, 17b relative to the support 12.

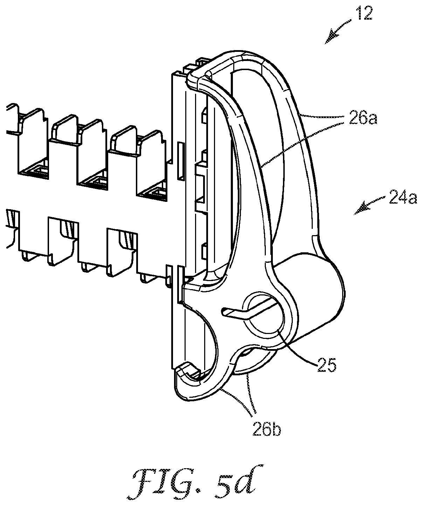

Fig. 5d is a perspective view of a part of another exemplary embodiment of a central support 12 of the termination module 11 according to the invention. It differs from the one shown in Figs. 5a to 5c in that the hinge element 25 has a closed round shape. Because of this shape the modular termination modules 11 need to be positioned on the swivel bar 9 before the swivel bar 9 is fixed at the frame 2 of the telecommunication assembly 1.

Fig. 6 is a perspective view of the contact strips 17a and 17b of the termination module of the Figs. 4a to 4c. The two contact strips 17a and 17b are identical. Therefore only the front contact strip 17a will be described in the following. On its front side 13a the contact strip 17a provides a plurality of parallel slots 41. Each slot 41 belongs to a chamber 46 carrying a pair of contacts 43 (as can be seen at the interface 42b of the rear contact strip 17b). Depending on the application the modular termination module is used in, the contacts or contact pairs 43 may have a different configuration. Next to the slot the contact pairs provide IDC elements (not shown in the drawings) for electrically and mechanically connecting telecommunication wires therewith. Opposite of the front side 13a the contact strip 17a provides an interface 42a for engaging with the interface 22a of the central support 12. The interface 42a has a meandering shape that corresponds to the meandering shape of the interface 22a of the central support 12. The contact strip 17a further comprises at the ends facing the lateral portions 24a and 24b of the central support 12 four bars 44 and 45, respectively two of them are parallel to each other. The bars 44 and 45 interact with the guiding notches 35 of the central support 12 (Fig. 5b) for fixing the contact strips 17a and 17b to the central support bar. The two bars 44 that are arranged closer to the front side 13a can have an essentially L-shaped cross section that corresponds to the L-shaped cross section of the guiding notches 35. The bars 45 are positioned spaced apart from the bars 44 such that the catch 37 may be placed between the two bars to fix the contact strips 17a and 17b to the central support 12.

Fig. 7 is a perspective view of an exemplary grounding element 18 of the termination module 11 of Figs. 4a to 4c. The grounding element 18 establishes an electrical connection between the contact strips 17a or 17b and an earth contact through at least the swivel axis 9 and the carrier 2 of the telecommunication assembly 1. Any other electrical path through the assembly is possible as well. The grounding element 18 is made out of electrically conductive material, here a sheet metal with appropriate conductivity attributes. It has an elongated, essentially rectangular base 51 with a plurality of parallel fingers 52 extending perpendicular from one side of the base 51. The number of fingers 52 corresponds to half of the number of chambers 46 in contact strip 17a or 17b. The grounding element 18 further comprises at each of its end a flat fixing portion 53 extending perpendicular to the plane of the base 51 and the fingers 52. Each fixing portion 53 has a structured edge 54 for securing the grounding element 18 to the central support 12. The fixing portions 53 engage with parallel openings 55 in the central support 12 (see Figs. 5a to 5c). Each central support 12 comprises four openings 55 on each side. Therefore there are four different positions for fixing the grounding element 18 to the central support 12. One of the positions is shown in Figs. 4b. As can be seen there, the fingers 52 of the grounding element 18 extend in the fixed position between the slots 41 of the contact strip 17b. The contact strips 17a and 17b provide recesses 56 for receiving the fingers 52 of the grounding element 18 (see Fig. 6).

The grounding element 18 further comprises a contact part 57 for making electrical contact with the swivel axis. The contact part 57 has a rounded shape. The grounding element 18 also comprises a connection part 58 for connecting the base 51 of the grounding element 18 with its contact part 57. Base 51, connection part 58 and contact part 57 are all made from a single piece of conductive material. As already described with reference to Fig. 4b the contact part 57 is received by the open groove 29 of the c-shaped hinge element 25 of the central support 12 and the connection part 58 is received by the channel 31 of the central support 12. Fig. 8 shows this detail in a perspective view of the c-shaped hinge element 25 of the central support 12 with the connection part 58 and the contact part 57 of the grounding element 18. When the c-shape hinge element 25 is brought into engagement with the swivel axis 9 of the telecommunication assembly 1 - as for example is shown in Fig. 1a- the contact part 57 of the grounding element 18 is brought into mechanical and electrical contact with the swivel axis 9 and thereby establishes the necessary electrical path for grounding the assembly. It is also possible to make the grounding element 18 out of two parts a comb part and a contact and connection part. In that case the electrical connection between the two parts could be realized by a spring leg or a fork shape or the like.

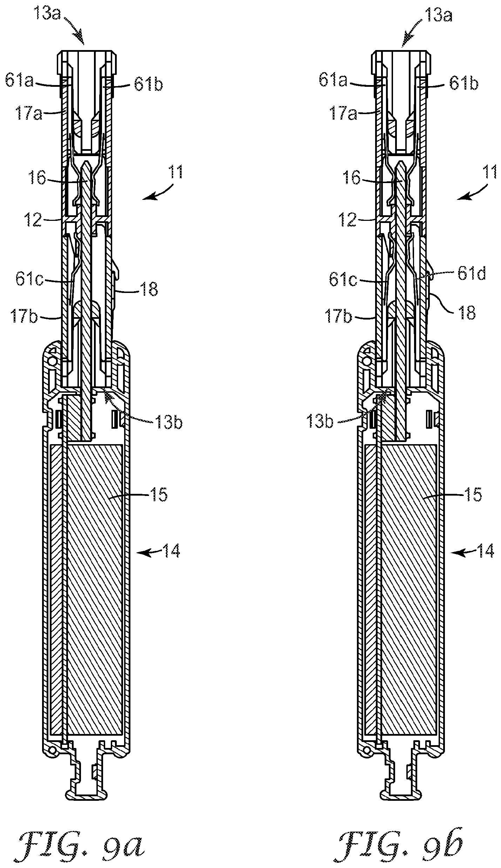

Figs. 9a and 9b are cross sectional views of one exemplary application of the modular termination module 11 according to one exemplary embodiment of the invention. The application shown in these drawings is a DSL application. The modular termination module 11 of Fig. 9a comprises a central support 12 and two contact strips 17a and 17b. The front contact strip 17a comprises two contacts, a first contact 61a is adapted to transmit a line signal and a second contact 61b is adapted to transmit a POTS (plain old telephone service) signal. The rear strip 17b comprises a third contact 61c, that is adapted to transmit data signals. Fig. 9a further shows a splitter plug 14 that is inserted into the modular termination module 11 from the rear side through contact strip 17b. The contact fingers 16 - which is a PCB in the embodiments shown in this application but which can also be any other kind of appropriate part that provides an electrical connection between the contacts 61a to 61c or 61d and the electronic equipment within the splitter plug 14 - of the splitter plug 14 contact the three contacts (61a - 61c) of the modular termination module 11. The splitter plug 14 can be inserted into the modular termination module 11 such that the housing 15 of the splitter plug 14 contacts the rear contact strip 17b. When the splitter plug 14 is removed out of the modular termination module 11 the contacts 61a, 61b of the front contact strip 17a move towards each other until they touch each other thereby establishing an electrical connection. This feature is also known as life-line service and provides a telephone service to a subscriber even if the splitter plug 14 is removed. A grounding element 18 is arranged at the front strip 17a.

The modular termination module 11 of Fig. 9b comprises a central support 12 and two contact strips 17a and 17b. The front contact strip 17a comprises - as the one in Fig. 9a - first and second contacts 61a, 61b, where contact 61a is adapted to transmit a line signal and contact 61b is adapted to transmit a POTS (plain old telephone service) signal. The rear strip 17b comprises a third contact 61c that is adapted to transmit data signals, and a fourth contact 61d that may be used to simplify migration events. Fig. 9b further shows a splitter plug 14 that is inserted into the modular termination module 11 from the rear side. The contact fingers 16 of the splitter plug 14 contact the four contacts (61a to 61d) of the modular termination module 11. The splitter plug 14 is inserted such into the modular termination module 11 that the housing 15 of the splitter plug 14 touches the rear contact strip 17b. The application shown in Fig. 9b also provides life-line service. A grounding element 18 is arranged at the front strip 17a.

The termination module 11 of Figs. 9a and 9b uses the contact fingers 16 of the plug 14 for making electrical connection between contacts 61a and 61b of the front contact strip 17a and contacts 61c and 61d of the rear contact strip 17b. The fingers 16 of the plug 14 go through the central support 12.

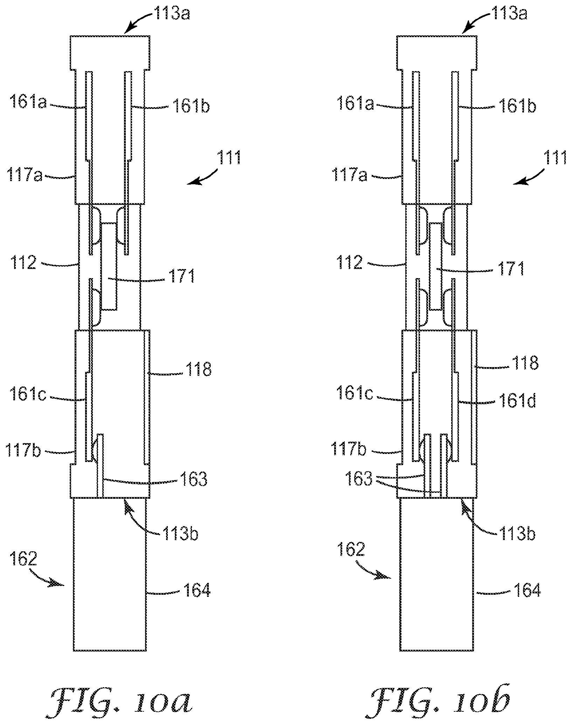

Fig. 10a and 10b are cross sectional views of another exemplary application of the modular termination module 111 according to one exemplary embodiment of the invention. The application shown in these drawings is for a MDF or main distribution frame application. The modular termination module 111 of Fig. 10a comprises a central support 112 and two contact strips 117a and 117b. The front contact strip 117a comprises first and second parallel contacts 161a, 161b. These contacts may for example be connected to jumper cables (not shown). The rear strip 117b comprises a third contact 161c, that may for example be connected to a cable transmitting an incoming signal. Fig. 10a further shows a plug 162, for example a protection plug that is inserted into the modular termination module 111 from the rear side. The contact finger 163 of the plug 162 connects to the third contact 161c of the rear strip 117b and provides protection to the line connected to that contact 161c. The plug 162 is inserted such into the modular termination module 111 that the housing 164 of the plug 162 touches the rear side 113b of the contact strip 117b. A grounding element 118 is arranged at the rear strip 117b.

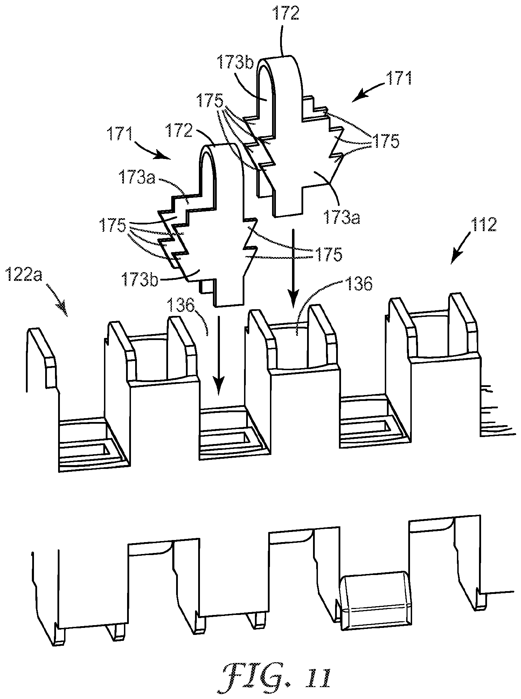

For establishing an electrical connection between the contacts 161a, 161b of the front strip 117a and the contacts 161c, 161d of the rear strip 117b, the central support 112 of the modular terminal module 111 provides a bridging element 171. The bridging element 171 is shown in more detail in Fig. 11, which is a partial view of the front interface 122a of the central support 112 and two extracted bridging elements 171. The bridging element 171 is essentially u-shaped with a base 172 and two legs 173a and 173b. The base 172 is rounded, such that a plug inserted from the front side into the modular termination module 111 to open the connection between the contacts 161a, 161b and the bridging element 171 may easily be pushed between the two parts. It is rounded on both sides such that the electrical connection between the contacts 161a, 161b may easily be opened. The bridging element 171 of Fig. 10a connects all three contacts 161a - 161c within the modular termination module 111. The bridging elements 171 are positioned in an assembled stage in the openings 136 of the central support 112. For fixing the bridging elements 171 within the openings 136 of the central support 112, the bridging elements 171 provide barbs 175 on both sides that engage with side walls of the openings 136. A bridging element 171 may be placed between each contact pair in the central support 112.

The modular termination module 111 of Fig. 10b comprises a central support 112 and two contact strips 117a and 117b. The front contact strip 117a comprises two contacts 161a, 161b. These contacts 161a, 161b may for example be connected to jumper cables (not shown). The rear strip 117b comprises two contacts 161c, 161d, that may for example be connected to a cable transmitting an incoming signal. Fig. 10b further shows a plug 162, for example a protection plug that is inserted into the modular termination module 111 from the rear side 113b. The contact fingers 163 of the plug 162 connect to the contacts 161c, 161d of the rear strip 117b. The plug 162 provides protection to the lines connected to the contacts 161c, 161d. The plug 162 is inserted such into the modular termination module 111 that the housing 164 of the plug 162 touches the rear side 113b of the rear contact strip 117b. A grounding element 118 is arranged at the rear strip 117b. The grounding element 118 is an option if protection of the telecommunication assembly 1 is needed.

For establishing an electrical connection between the contacts 161a, 161b of the front strip 117a and the contacts 161c, 161d of the rear strip 117b, the central support 112 of the modular terminal module 111 provides a bridging element 171, similar to that previously described, as the modular termination module 111 of the MDF application shown in Fig. 10a.

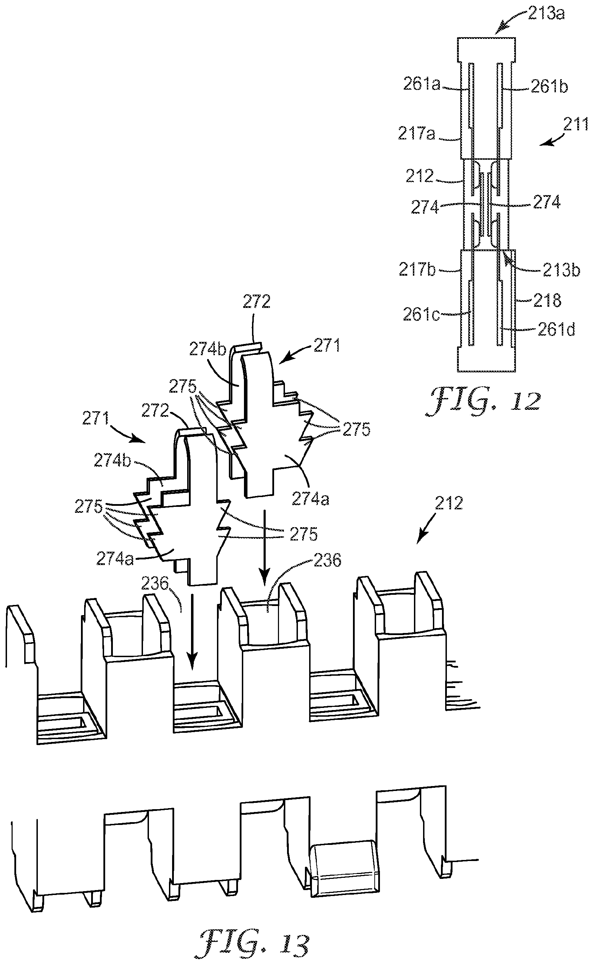

Fig. 12 is a cross sectional view of an exemplary application of the modular termination module 211 according to another exemplary embodiment of the invention. The application shown in this drawing may be used in high density or HD applications. The modular termination module 211 of Fig. 12 comprises a central support 212 and two contact strips 217a and 217b. The front contact strip 217a comprises two parallel contacts 261a, 261b. These contacts may be adapted to be connected to jumper cables. The rear strip 217b comprises two contacts 261c, 261d that may be adapted to be connected to cables transmitting incoming signals. A grounding element 218 is arranged at the front strip 217a. The central support 212 of the modular termination module 211 comprises two bridging elements 274a and 274b; a first one 274a is connecting contact 261a of the front strip 217a and the contact 261c of the rear strip 217b; a second one 274b is connecting the contact 261b of the front strip 217a with the contact 261d of the rear strip 217b. The two bridging elements 274a and 274b are j-shaped. One could also describe the shape of those elements by two halves of the u of the bridging element 171 shown in Fig. 11, but with a gap between the two halves creating isolation from one another. Their upper edge is rounded as the u-shaped bridging element 271 for facilitating the insertion of a plug between the contacts 261 and the bridging elements 274a and 274b. The j-shaped bridging elements 274a and 274b are located at the same places as the u-shaped bridging elements 171 described above. In addition, each of bridging elements 274a, 274b can include barbs 275 on one or both sides to engage with the side walls in openings 236.

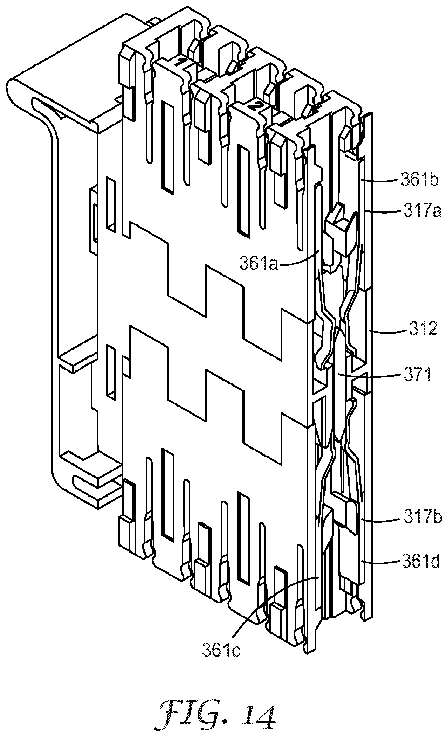

Fig. 14 is a three dimensional view of another exemplary embodiment of the invention showing a cross section of a modular termination module 311. The application shown in this drawing may also be used in high density or HD applications. The modular termination module 311 of Fig. 14 comprises a central support 312 and two contact strips 317a and 317b. The front contact strip 317a comprises two parallel rows of contacts 361a and 361b. These contacts may be adapted to be connected to jumper cables. The rear strip 317b comprises two rows of contacts 361c and 361d that may be adapted to be connected to cables transmitting incoming signals. The central support 312 comprises a printed circuit board 371 carrying traces that are electrically connecting contacts of the front strip 317a with contacts of the rear strip 317b as will be described in detail below.

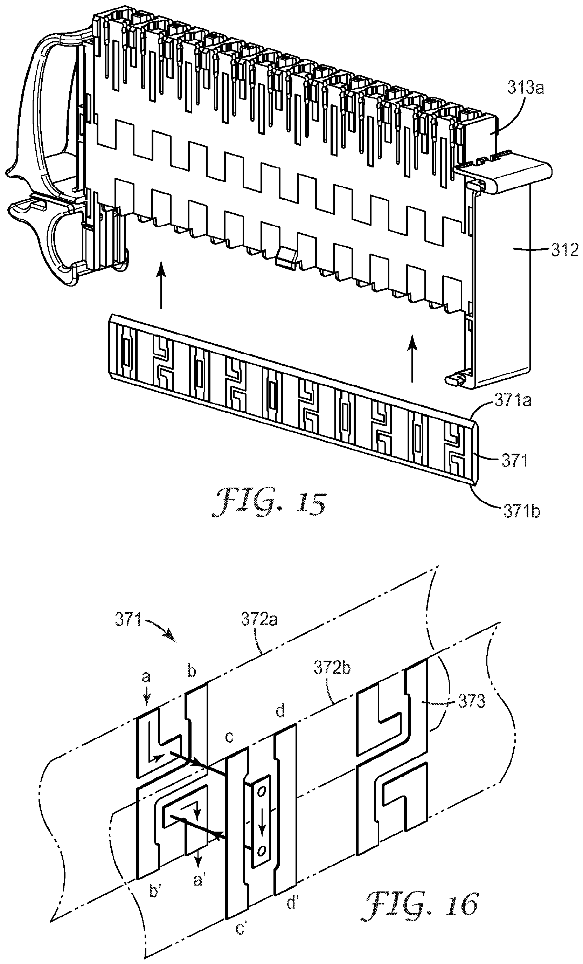

As can be seen in Fig. 15 - which is a perspective view of a central support 312 with a front strip 317a and a printed circuit board 371 - the printed circuit board has a rectangular shape. Only one printed circuit board is used to establish all the necessary connections between the contacts of the front strip 317a and the contacts of the rear strip 317b. This offers a big advantage during the assembly process of the modular termination module 311, since only one piece has to be integrated into the modular termination module 311. It is of course also possible to use several printed circuit boards within one central support. 312. The upper and lower edges 372a and 372b can be tapered and can thereby be easily pushed between the contacts of the front and the rear strip 317a and 317b against a spring force of the contacts thereby providing a reliable electrical connection between the contacts and traces on the printed circuit board 371.

Fig. 16 is a schematic view of a part of the printed circuit board 371 of Figs. 14 and 15 showing the traces 373 on the board. The printed circuit board 371 may comprise two or more parallel layers 372, each layer may comprise traces 373 on it. The upper part of the printed circuit board as shown in Fig. 16 may be facing towards the front strip 317a and the lower side of the printed circuit board as shown in Fig. 16 may be facing towards the rear strip 317b. a, b, c and d may be the locations where contact pairs of the front strip 317a touch the printed circuit board and make the electrical connection between the traces 373 of the printed circuit board and the contacts of the strip. a and b are located on a first layer 372a of the printed circuit board; c and d are located on a second layer 372b of the printed circuit board. a', b', c' and d' may be the locations where the contact pairs of the rear strip 371b touch the printed circuit board and make the electrical connection between the traces 373 of the printed circuit board and the contacts of the strip. a' and b' are located on the first layer 372a of the printed circuit board; c' and d' are located on a second layer 372b of the printed circuit board. The printed circuit board according to the shown embodiment is designed such, that the traces of the contact pair a, b (first layer) is twisted, while the traces of the contact pair c, d (second layer) is straight, that means not twisted. The twisting is done by switching the trace connecting a and a' to the second layer and back, thereby crossing the trace connecting b and b'. The traces for the adjacent pairs are designed the other way around: The traces of the first layer are kept straight, while the traces of the second layer are twisted. It is also possible to only twist the traces of one layer either the first layer or the second layer. Twisting of the traces helps to compensate crosstalk. By adjusting the printed circuit board higher categories of transmission rates may be met.

It is also possible to have a disconnection point between the front and the rear strip, by inserting a plug or test equipment between the contacts and the printed circuit board. This offers the possibility of having an independent measurement point on the modular termination module.

## Claims

1. A modular termination module (11, 111, 211, 311) for a telecommunication assembly (1) with a carrier (2),
the termination module comprising:
- contacts (61a, 61b, 61c, 61d, 161a, 161b, 161c, 161d, 261a, 261b, 261c, 261d, 361a, 361b, 361c, 361d) for connecting telecommunication wires (10) therewith;
**characterized by** the termination module further comprising
- a support (12, 112, 212, 312) adapted to be connected to the carrier of the telecommunication assembly, and by
- the support further comprising at least one interface (22a, 22b, 122a) for engaging with different kinds of contact strips (17a, 17b, 117a, 117b, 217a, 217b, 317a, 317b) carrying the contacts for connecting wires therewith, wherein the contact strips differ in the kind of contacts they carry.

2. The modular termination module according to claim 1, wherein the support comprises a hinge element (25) adapted to engage with a complementary hinge element (9) of the telecommunication assembly allowing swivelling of the modular termination module with regard to the telecommunication assembly.

3. The modular termination module according to claim 1 or 2, wherein the interface of the support for engaging contact strips has a meandering shape.

4. The modular termination module according to any of the preceding claims, wherein the support comprises two interfaces (22a, 22b, 122a) for engaging with different kind of contact strips.

5. The modular termination module according to claim 4, wherein the interfaces (22a, 22b, 122a) of the support face two opposite directions.

6. The modular termination module according to claim 5, wherein the interfaces (22a, 22b, 122a) of the support engage with two contact strips (17a, 17b, 117a, 117b, 217a, 217b, 317a, 317b) that are arranged on opposite sides of the support.

7. The modular termination module according to claim 6, wherein the support comprises a structure for carrying at least one electrically conductive bridging element (171, 274a, 274b) for electrically connecting contacts of the contact strips with each other.

8. The modular termination module according to claim 6, wherein the support comprises a structure for carrying at least one printed circuit board (PCB) (371) for electrically connecting contacts of the contact strips with each other.

9. The modular termination module according to claim 8, wherein the PCB comprises at least one crosstalk compensation element (373).

10. The modular termination module according to any of the preceding claims, wherein the support comprises wire guide elements (26a, 26b).

11. The modular termination module according to any of the preceding claims, wherein the support comprises fixing structures for fixing wire guide housings with wire guide channels.

12. The modular termination module according to any of the preceding claims, wherein the support comprises corresponding fastening elements (33, 34) for fixing modular termination modules adjacent each other.

13. The modular termination module according to any of the preceding claims comprising a grounding element (18, 118,218) that is fitted to the support adjacent at least one of the contact strips.

14. The modular termination module according to claim 13, wherein the support comprises fixing structures (23) for holding the grounding element.

## Patentansprüche

1. Modulares Abschlussmodul (11, 111, 211, 311) für eine Telekommunikationsbaugruppe (1) mit einem Träger (2),
wobei das Abschlussmodul
umfasst:
- Kontakte (61a, 61b, 61c, 61d, 161a, 161b, 161c, 161d, 261a, 261b, 261c, 261d, 361a, 361b, 361c, 361d) zum Verbinden von Telekommunikationsdrähten (10) hiermit;
**dadurch gekennzeichnet, dass** das Abschlussmodul ferner umfasst
- eine Stütze (12, 112, 212, 312), die dazu konzipiert ist, mit dem Träger der Telekommunikationsbaugruppe verbunden zu werden, und dadurch, dass
- die Stütze ferner mindestens eine Schnittstelle (22a, 22b, 122a) zum Eingreifen in verschiedene Arten von Kontaktstreifen (17a, 17b, 117a, 117b, 217a, 217b, 317a, 317b) umfasst, welche die Kontakte zum Verbinden von Drähten hiermit tragen, wobei sich die Kontaktstreifen in der Art der Kontakte, die sie tragen, unterscheiden.

2. Modulares Abschlussmodul nach Anspruch 1, wobei die Stütze ein Scharnierelement (25) umfasst, das dazu konzipiert ist, in ein komplementäres Scharnierelement (9) der Telekommunikationsbaugruppe einzugreifen, wodurch ein Schwenken des modularen Abschlussmoduls in Bezug auf die Telekommunikationsbaugruppe ermöglicht wird.

3. Modulares Abschlussmodul nach Anspruch 1 oder 2, wobei die Schnittstelle der Stütze zum Eingreifen in Kontaktstreifen eine mäandrierende Form besitzt.

4. Modulares Abschlussmodul nach einem der vorhergehenden Ansprüche, wobei die Stütze zwei Schnittstellen (22a, 22b, 122a) zum Eingreifen in verschiedene Arten von Kontaktstreifen umfasst.

5. Modulares Abschlussmodul nach Anspruch 4, wobei die Schnittstellen (22a, 22b, 122a) der Stütze in zwei entgegengesetzte Richtungen zeigen.

6. Modulares Abschlussmodul nach Anspruch 5, wobei die Schnittstellen (22a, 22b, 122a) der Stütze in zwei Kontaktstreifen (17a, 17b, 117a, 117b, 217a, 217b, 317a, 317b) eingreifen, die auf gegenüberliegenden Seiten der Stütze angeordnet sind.

7. Modulares Abschlussmodul nach Anspruch 6, wobei die Stütze eine Struktur zum Tragen mindestens eines elektrisch leitfähigen Überbrückungselements (171, 274a, 274b) zum elektrischen Verbinden von Kontakten der Kontaktstreifen miteinander umfasst.

8. Modulares Abschlussmodul nach Anspruch 6, wobei die Stütze eine Struktur zum Tragen mindestens einer Leiterplatte (printed circuit board (PCB)) (371) zum elektrischen Verbinden von Kontakten der Kontaktstreifen miteinander umfasst.

9. Modulares Abschlussmodul nach Anspruch 8, wobei die PCB mindestens ein Nebensprechkompensationselement (373) umfasst.

10. Modulares Abschlussmodul nach einem der vorhergehenden Ansprüche, wobei die Stütze Drahtführungselemente (26a, 26b) umfasst.

11. Modulares Abschlussmodul nach einem der vorhergehenden Ansprüche, wobei die Stütze Befestigungsstrukturen zum Befestigen von Drahtführungsgehäusen mit Drahtführungskanälen umfasst.

12. Modulares Abschlussmodul nach einem der vorhergehenden Ansprüche, wobei die Stütze entsprechende Befestigungselemente (33, 34) zum Befestigen von modularen Abschlussmodulen benachbart zueinander umfasst.

13. Modulares Abschlussmodul nach einem der vorhergehenden Ansprüche, umfassend ein Erdungselement (18, 118, 218), das an der Stütze benachbart zu mindestens einem der Kontaktstreifen angebracht ist.

14. Modulares Abschlussmodul nach Anspruch 13, wobei die Stütze Befestigungsstrukturen (23) zum Halten des Erdungselements umfasst.

## Revendications

1. Module de terminaison modulaire (11, 111, 211, 311) destiné à un ensemble de télécommunication (1) avec un porteur (2),
le module de terminaison
comprenant :
- des contacts (61a, 61b, 61c, 61d, 161a, 161b, 161c, 161d, 261a, 261b, 261c, 261d, 361a, 361b, 361c, 361d) pour connecter des fils de télécommunication (10) avec ceux-ci ;
**caractérisé en ce que** le module de terminaison comprend en outre
- un support (12, 112, 212, 312) conçu pour être connecté au porteur de l'ensemble de télécommunication, et **en ce que**
- le support comprend en outre au moins une interface (22a, 22b, 122a) pour venir en prise avec différents types de bandes de contacts (17a, 17b, 117a, 117b, 217a, 217b, 317a, 317b) portant les contacts permettant de connecter des fils avec ceux-ci, dans lequel les bandes de contacts diffèrent dans le type de contacts qu'elles portent.

2. Module de terminaison modulaire selon la revendication 1, dans lequel le support comprend un élément de charnière (25) conçu pour venir en prise avec un élément de charnière complémentaire (9) de l'ensemble de télécommunication, permettant un pivotement du module de terminaison modulaire par rapport à l'ensemble de télécommunication.

3. Module de terminaison modulaire selon la revendication 1 ou 2, dans lequel l'interface du support pour venir en prise avec des bandes de contacts possède une forme tortueuse.

4. Module de terminaison modulaire selon l'une quelconque des revendications précédentes, dans lequel le support comprend deux interfaces (22a, 22b, 122a) pour venir en prise avec des types différents de bandes de contacts.

5. Module de terminaison modulaire selon la revendication 4, dans lequel les interfaces (22a, 22b, 122a) du support font face à deux directions opposées.

6. Module de terminaison modulaire selon la revendication 5, dans lequel les interfaces (22a, 22b, 122a) du support viennent en prise avec deux bandes de contacts (17a, 17b, 117a, 117b, 217a, 217b, 317a, 317b) qui sont agencées sur des côtés opposés du support.

7. Module de terminaison modulaire selon la revendication 6, dans lequel le support comprend une structure destinée à porter au moins un élément de pontage électriquement conducteur (171, 274a, 274b) permettant de connecter électriquement des contacts des bandes de contacts les uns avec les autres.

8. Module de terminaison modulaire selon la revendication 6, dans lequel le support comprend une structure destinée à porter au moins une carte à circuit imprimé (PCB) (371) permettant de connecter électriquement des contacts des bandes de contacts les uns avec les autres.

9. Module de terminaison modulaire selon la revendication 8, dans lequel la PCB comprend au moins un élément de compensation de diaphonie (373).

10. Module de terminaison modulaire selon l'une quelconque des revendications précédentes, dans lequel le support comprend des éléments de guidage de fil (26a, 26b).

11. Module de terminaison modulaire selon l'une quelconque des revendications précédentes, dans lequel le support comprend des structures de fixation permettant de fixer des logements de guidage de fil avec des canaux de guidage de fil.

12. Module de terminaison modulaire selon l'une quelconque des revendications précédentes, dans lequel le support comprend des éléments de fixation correspondants (33, 34) permettant de fixer des modules de terminaison modulaires les uns à côté des autres.

13. Module de terminaison modulaire selon l'une quelconque des revendications précédentes, comprenant un élément de masse (18, 118, 218) qui est monté au support à côté d'au moins une des bandes de contacts.

14. Module de terminaison modulaire selon la revendication 13, dans lequel le support comprend des structures de fixation (23) permettant de retenir l'élément de masse.
